# EUROPÄISCHE PATENTANMELDUNG

(11) **EP 1 488 897 A1**
(43) Veröffentlichungstag der Anmeldung: **22.12.2004**
(21) Anmeldenummer: 04014062.6
(22) Anmeldetag: 16.06.2004
(51) Int. Cl.: B27K 3/00

(54) **Verfahren zur Dekontamination von Teilen**

(30) Priorität: 20.06.2003 DE 10328093
(71) Anmelder: Messer Group GmbH, 65843 Sulzbach (DE); Fraunhofer-Gesellschaft zur Förderung der angewandten Forschung e.V., 80636 München (DE)
(72) Erfinder: Berger, Thomas, 45219 Essen (DE); Gockel, Frank, 45881 Gelsenkirchen (DE); Eisbein, Manfred, 01665 Scharfenberg (DE); Jelen, Erich, 46459 Rees-Bienen (DE); Unger, Achim, 16225 Eberswalde (DE)

(57) **Zusammenfassung**

Bei dem Verfahren zur Entfernung von Schadstoffen wie DDT, Lindan oder PCP von Objekten mit organischen Materialien, z.B. Holzskulpturen, durch Behandlung mit einem überkritischen Gas wie Kohlendioxid wird das überkritische Gas mit einem Adsorptionsmittel oder Absorptionsmittel für die Schadstoffe in Kontakt gebracht wird.

## Beschreibung

Die Erfindung betrifft ein Verfahren zur Entfernung von Schadstoffen von Objekten mit organischen Materialien durch Behandlung mit einem überkritischen Gas wie Kohlendioxid.

Kunstgegenstände aus organischem Material wie Holzfiguren wurden in der Vergangenheit zur Konservierung und zur Schädlingsbekämpfung mit Bioziden wie DDT, Lindan oder PCP behandelt. Es wurden verschiedene Versuche unternommen, die Belastung solcher behandelter Kunstgegenstände zu reduzieren.

Aus der DE 197 14 302 C2 ist ein Verfahren zum Entfernen von Schadstoff enthaltenden Konservierungsmitteln aus organischen Objekten wie Papier, Holz oder Fasern mittels überkritischem Kohlendioxid bekannt.

Ein Verfahren zur Reinigung von Halbleiteroberflächen mittels überkritischem Kohlendioxid wird in der EP 086 895 A2 beschrieben.

Der Erfindung liegt die Aufgabe zugrunde, ein alternatives Verfahren zur Dekontamination von schadstoffhaltigen Gegenständen bereit zu stellen.

Die Aufgabe wurde gelöst durch ein Verfahren mit den in Anspruch 1 beschriebenen Merkmalen.

Für die Extraktion von Schadstoffen, insbesondere bioziden Stoffen wie DDT, Lindan oder PCP, aus einem Objekt (z.B. Körper aus organischem Material oder Körper mit einem oder mehreren Teilen aus organischem Material, z.B. eine Holzfigur) wird ein Lösungsmittel in Form eines überkritischen Behandlungsgases eingesetzt. Das Behandlungsgas umströmt das Objekt löst dabei die Schadstoffe aus dem Material.

Ein sogenannter Extraktor ist ein Behälter, in dem ein Überdruck erzeugt werden kann. In diesen Behälter wird das zu behandelnde Objekt eingebracht. Der Behälter ist beispielsweise ein Autoklav.

Der Extraktor kann batchweise (stationärer Betrieb) oder im Durchfluß mit dem überkritischen Gas (Behandlungsgas) betrieben werden.

Die Behandlung des Objektes mit einem überkritischen Gas dient beispielsweise zur Dekontamination von Objekten mit organischem Material (z.B. Holz, Papier, Fasern), insbesondere zur Dekontamination von Kunstobjekten oder musealen Objekten wie Holzfiguren, Holzgegenstände, Bücher oder Textilien. Kontaminierende Stoffe, die mittels des Verfahrens entfernt werden, sind insbesondere DDT, Lindan oder PCP.

Das als Lösungsmittel oder Extraktionsmittel eingesetzte überkritische Behandlungsgas zeichnet sich durch eine hohe Dichte aus, was wiederum die Lösungsmittelwirkung für die in dem Körper zu lösenden Stoffe verbessert. Die hohe Dichte wird dadurch erreicht, dass das überkritische Behandlungsgas in einem Temperatur-Druck-Regime oberhalb seiner spezifischen kritischen Temperatur- und Druckwerte gehalten wird.

Die Temperatur oder Temperaturführung während der Extraktion hängt im wesentlichen von den thermischen und chemischen Eigenschaften der Stoffe sowie von den geometrischen Abmessungen des Objektes ab.

Die Behandlung der Objekte mit dem überkritischen Gas erfolgt bei Drücken, die mindestens dem kritischen Druck entsprechen, und einer Temperatur, die mindestens der kritischen Temperatur entsprecht. Im allgemeinen liegt der Druck im Bereich von 50 bis 300 bar und die Temperatur im Bereich von 30 bis 80 °C, vorzugsweise im Bereich von 30 bis 50 °C, insbesondere um 40 °C. Die Behandlung mit überkritischem Kohlendioxid erfolgt beispielsweise bei einem Druck im Bereich von 100 bis 250 bar bei einer Temperatur um 40 °C.

Als Behandlungsgas (überkritisches Gas) dienen Kohlendioxid, Distickstoffmonoxid, ein Gemisch aus Kohlendioxid und Distickstoffmonoxid, Kohlendioxid enthaltendes Distickstoffmonoxid, Distickstoffmonoxid enthaltendes Kohlendioxid, ein Kohlenwasserstoff oder Kohlenwasserstoffgemisch, insbesondere Propan, oder Wasser.

Der Extraktor ist z.B. ein druckdichtes Gehäuse, das einen Behandlungsraum für die Aufnahme mindestens eines Objektes umschließt, mit mindestens einem Einlass für ein Behandlungsgas und mit mindestens einem Auslass für das Behandlungsgas und mit einer verschließbaren Belade- und Entnahmeöffnung für das Objekt.

Gemäß der Erfindung wird bei der Behandlung des Objektes das Behandlungsgas mit einem Adsorptionsmittel oder Absorptionsmittel in Kontakt gebracht. Adsorptionsmittel oder Absorptionsmittel sind beispielsweise Aktivkohle, ein Kunststoff mit großer Oberfläche (z.B. makroretukuläres Styrol-Copolymerisat, oberflächenreiches Polyäthylen), Kieselgel, Kieselgur, Aluminiumoxid oder ein Zeolith. Bevorzugt werden Adsorptionsmittel oder Absorptionsmittel, die geeignet sind zur Bindung von Schadstoffen wie DDT, Lindan oder PCP. Besonders bevorzugt als Adsorptionsmittel oder Absorptionsmittel ist Aktivkohle.

Das Adsorptionsmittel oder Absorptionsmittel wird vorzugsweise im Extraktor angeordnet. Das Adsorptionsmittel oder Absorptionsmittel wird vorteilhaft oberhalb und unterhalb des zu behandelnden Objektes oder um das Objekt im Extraktor angeordnet. Vorteilhaft ist der Einsatz des Adsorptionsmittels oder Absorptionsmittels in gasdurchlässigen Hüllen, die Partikel zurückhalten. Bei Einsatz eines Durchfluß-Extraktors (Durchfluß des Behandlungsgases bzw. überkritischen Gases) wird das Adsorptionsmittel oder Absorptionsmittel mindestens im Bereich des Ausganges des Behandlungsgases angeordnet. Das Adsorptionsmittel oder Absorptionsmittel bindet auf diese Weise die gelösten Schadstoffe bereits im Extraktor. Zusätzliche Filterelemente mit dem Adsorptionsmittel oder Absorptionsmittel im Weg des Behandlungsgases sind vorteilhaft, insbesondere dem Extraktor nachgeschaltete Filterelemente.

Im folgenden wird die Erfindung anhand eines Ausführungsbeispiels und der Zeichnung näher erläutert.
- **Fig. 1**: zeigt eine Vorrichtung zur Durchführung des erfindungsgemäßen Verfahrens in schematischer Darstellung.
- **Fig. 2**: zeigt ein Schema eines Abscheiders mit Adsorber (Aktivkohlesack).
- **Fig. 3**: zeigt ein Schema eines Extraktors mit Adsorber (Aktivkohlekissen) und Gestell zur Ausnahme eines Objektes (Holzfigur).

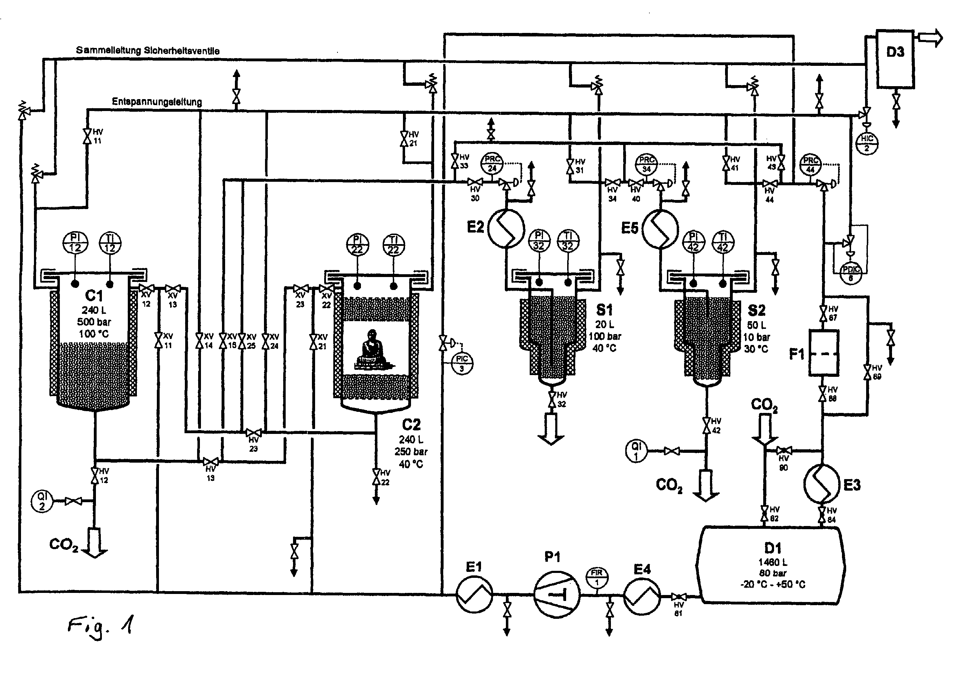

Die in **Figur 1** dargestellte Vorrichtung ist ein Beispiel für eine Anlage zur Dekontamination eines Objektes aus einem organischen Material, z.B. eine Holzfigur.

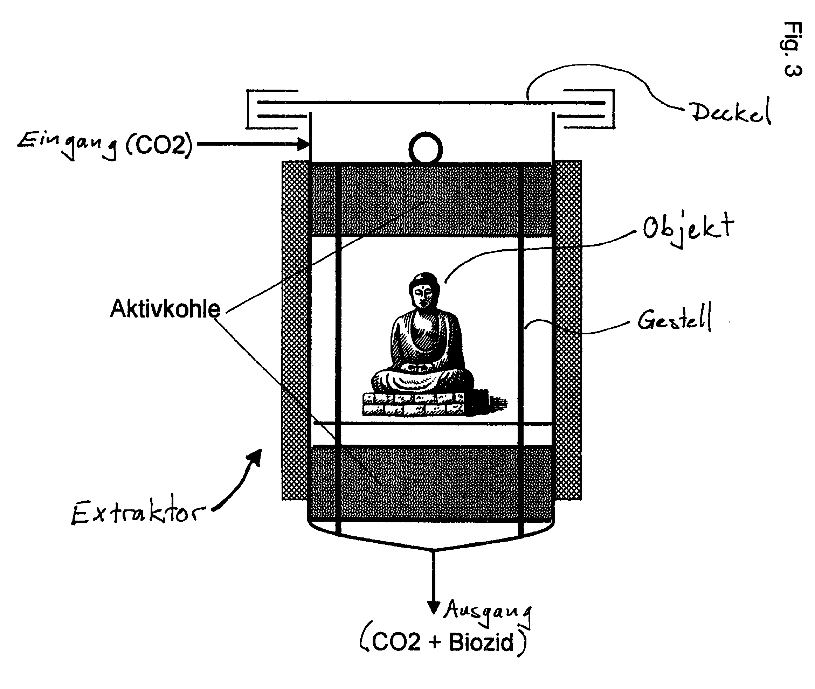

In der Anlage sind 4 Druckbehälter in Reihe geschaltet: im Behälter C2 (Extraktor mit Adsorber) wurde die zu behandelne Holzfigur und zwei "Aktivkohlekissen" eingebracht (siehe auch Fig. 3). Die Figur befindet sich in einem Metallgestell, welches zum besseren Handling gefertigt wurde und per Kran in den Extraktor eingelassen werden konnte. Unterhalb und oberhalb des Gestelles befindet sich das Adsorptionsmittel, im Beispiel Aktivkohle. Es wird vorteilhaft als ein Aktivkohlekissen (gasdurchlässige Hülle mit Adsorptionsmittel). Diese Kissen haben die Form eines Kuchens und entsprachen in ihrem Durchmesser dem Innendurchmesser des Behälters (siehe Fig. 3). Die "Kissen" werden z.B. aus einem Polypropylenmaterial gefertigt und können Feinstpartikel von 8 Micrometer und größer zurückhalten. Diese "Kissen" (Hüllen) werden dann mit Aktivkohle gefüllt und verschlossen. Das untere Aktivkohlekissen hat die Funktion eines Hauptadsorbers. In Lösung gegangenes DDT und Lindan wird von der unterhalb des Objektes (der Holzfigur) angeordneten Aktivkohle gebunden, da die "Adsorptionsaffinität" hier unter hohem Druck sehr groß ist. Da die Kissen paßgenau gefertigt sind, muß das Behandlungsgas (C02) mit den extrahierten Schadstoffen durch das Kissen und somit durch die Aktivkohleschüttung strömen.

Das obere Kissen im Extraktor ist als Notadsorber vorgesehen. Für den Fall einer Leckage muß sichergestellt werden, das kein kontaminiertes Behandlungsgas (C02) oder nur ein sehr schwach kontaminiertes Behandlungsgas in die Atmosphäre gelangt. Diese Gefahr einer Leckage ist im Deckelbereich oder im Bodenbereich höher als im Rumpfbereich des Behälters, so dass im Falle einer Deckelleckage das ausströmende und mit DDT und Lindan beladene Behandlungsgas - da es bei einer Leckage im Deckelbereich von dem Objekt (der Figur) aufwärts strömt - das obere Kissen durchströmen muß und abgereinigt wird.

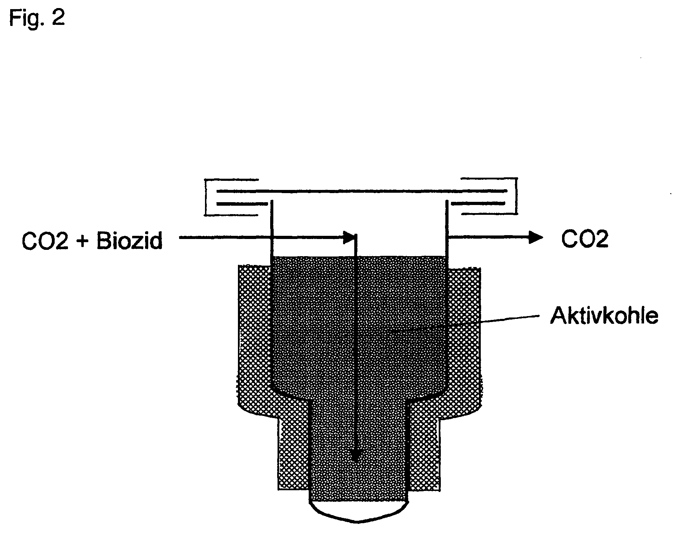

Behälter S1 und S2 (siehe auch Fig. 2) dienen als "normale" Abscheider. Die Abscheider sind druckfeste Behälter mit einem Eingang und einem Ausgang für das Behandlungsgas(hier C02). Die Abscheider dienen als Filterelemente. Hier wird das Behandlungsgas stufenweise entspannt. In beiden Abscheidern werden Filtersäcke mit Aktivkohle eingebracht, die aus dem gleichen Material wie die "Aktivkohlekissen" gefertigt sind. Auch hier werden die Säcke der Behälterwand angepaßt. Das CO2 wird hier jeweils durch ein Tauchrohr in die Aktivkohleschüttung eingebracht und muß diese durchströmen. Behälter S1 wird unter überkritischen Bedingungen betrieben (1 00bar / 40°C), um die höhere Adsorbierbarkeit bei höheren Drücken zu nutzen. Behälter S2 wird bei 7-12 bar und 50°C betrieben. Von Behälter S1 nach Behälter S2 findet die Totalentspannung statt. Der Druck von 7-12bar kommt durch den Rohrleitungswiderstand zustande.

Behälter C1 dient als "Polizeifilter". Hier sind 3 Filterkissen mit Aktivkohle übereinander angebracht. Auch hier muß das Behandlungsgas CO2 - wegen die Paßgenauigkeit der Filter - durch die Aktivkohle strömen. Danach wird das CO2 der Abluft zugeführt.

Das Behandlungsgas (C02) wird in D1 bereitgestellt.

In Fig. 3 ist der Extraktor mit Gestell zur Aufnahme des Objektes (hier einer Holzfigur) schematisch dargestellt. Als Extraktor dient ein druckfester Behälter mit einem abnehmbaren Deckel, einem Eingang für das Behandlungsgas ("CO2") und einem Ausgang für das Behandlungsgas ("CO2 und Biozid").

## Patentansprüche

1. Verfahren zur Entfernung von Schadstoffen von Objekten mit organischen Materialien durch Behandlung mit einem überkritischen Gas, wobei das überkritische Gas mit einem Adsorptionsmittel oder Absorptionsmittel für die Schadstoffe in Kontakt gebracht wird.

2. Verfahren nach Anspruch 1, **dadurch gekennzeichnet, dass** das Adsorptionsmittel oder Absorptionsmittel eine Aktivkohle, ein Kunststoff mit großer Oberfläche, Kieselgel, Kieselgur, Aluminiumoxid oder ein Zeolith ist.

3. Verfahren nach Anspruch 1 oder 2, **dadurch gekennzeichnet, dass** der Schadstoff ein organisches Biozid ist.

4. Verfahren nach einem der vorhergehenden Ansprüche, **dadurch gekennzeichnet, dass** der Schadstoff DDT, Lindan oder PCP ist.

5. Verfahren nach Anspruch 4, **dadurch gekennzeichnet, dass** als überkritisches Gas Kohlendioxid, Distickstoffmonoxid, ein Gemisch aus Kohlendioxid und Distickstoffmonoxid, Kohlendioxid enthaltendes Distickstoffmonoxid, Distickstoffmonoxid enthaltendes Kohlendioxid, ein Kohlenwasserstoff oder Kohlenwasserstoffgemisch, insbesondere Propan, oder Wasser verwendet wird.

6. Verfahren nach einem der vorhergehenden Ansprüche, **dadurch gekennzeichnet, dass** das Adsorptionsmittel oder Absorptionsmittel in einem Extraktor mit dem zu behandelnden Objekt und/oder in einem Filterelement außerhalb des Extraktors eingesetzt wird.

7. Verfahren nach einem der vorhergehenden Ansprüche, **dadurch gekennzeichnet, dass** die Behandlung des Objektes in einem stationären Extraktor oder in einem Durchflußextraktor mit dem überkritischen Gas erfolgt.

8. Verfahren nach einem der vorhergehenden Ansprüche, **dadurch gekennzeichnet, dass** die Entfernung von Schadstoffen mit überkritischem Kohlendioxid bei einem Druck im Bereich von 100 bis 250 bar erfolgt.

9. Verfahren nach einem der vorhergehenden Ansprüche, **dadurch gekennzeichnet, dass** die Entfernung von Schadstoffen mit überkritischem Kohlendioxid bei einer Temperatur im Bereich von 15 bis 80 °C, insbesondere im Bereich von 25 bis 50 °C, erfolgt.

10. Verwendung von einem Adsorptionsmittel oder Absorptionsmittel bei der Dekontamination von Objekten mit Teilen aus einem organischen Material mittels Behandlung mit einem überkritischen Gas.
